# EUROPEAN PATENT SPECIFICATION

(11) **EP 2 480 737 B1**
(45) Date of publication and mention of the grant of the patent: **08.05.2013**
(21) Application number: 09783411.3
(22) Date of filing: 25.09.2009
(51) Int. Cl.: E04H 9/02

(54) **METHOD AND STRUCTURE FOR DAMPING MOVEMENT IN BUILDINGS**
VERFAHREN UND STRUKTUR ZUR BEWEGUNGSDÄMPFUNG BEI GEBÄUDEN
PROCÉDÉ ET STRUCTURE POUR AMORTISSEMENT DE MOUVEMENT DANS DES BÂTIMENTS

(43) Date of publication of application: 01.08.2012
(73) Proprietor: VSL International AG, 3098 Köniz (CH)
(72) Inventor: LIM, Koi, Kee, 8 Sun Yip Street Chai Wan Hong Kong (CN)
(74) Representative: Scheuzger, Beat Otto
(86) International application number: PCT/EP2009/062434
(87) International publication number: WO 2011/035809

(56) References cited:
- EP-A1- 1 544 366
- WO-A1-2007/045900
- US-A- 5 054 251
- US-A- 5 215 382
- US-A1- 2008 307 722

## Description

The invention relates to the damping of movements in building structures. In particular, it relates to the damping of oscillatory movements in a structural member by means of dampers connected to a second structural member.

Buildings, particularly high-rise structures, are designed to accommodate a certain amount of vibration, caused, for example, by the activities of the occupants, or by the movement of vehicles, and to withstand movement due to natural events such as wind gusts or earth tremors. It is common practice to design buildings whose structures include dampers to absorb and dissipate such movement. Damping the movement in a building not only provides better structural protection against potentially destructive earthquake or wind forces, it also makes the day-to-day occupancy of the building more pleasant. Swaying movements and oscillations in a building's structure are usually experienced as unpleasant sensations by the occupants. The damping reduces the magnitude and, to a certain extent, the velocity and acceleration of the movements of the building.

One such solution, for example, is to provide a so-called tuned mass damper (TMD) in the upper part of a structure. Tuned mass dampers may be implemented as one or more extremely massive blocks, moving in opposition to the resonant frequency of the oscillations of the structure. Alternatively, they may be implemented as sluice tanks containing liquid moving in opposition to the oscillations being damped. There are, however, major drawbacks with using tuned mass or sluice tank dampers. They are bulky and heavy, and need to be installed in the top of a building - traditionally the most lucrative space in the building. They represent a significant extra cost in a project, and do not offer any reduction in structural costs (indeed, the structure must be designed to support the additional weight of the tuned masses or sluice tanks, in addition to the bearings or other supporting mechanisms). TMDs must also be accurately tuned to the first mode of oscillation of the structure at the expense of damping other harmonics. Limit state calculations may be unreliable for TMDs, and it may be difficult or impossible to establish whether a TMD system will satisfy the ultimate limit state (ULS) for a building for wind gusting and earthquake. To satisfy the ULS, a building must not collapse when subjected to peak design loading and, since the effective operating range of TMDs is normally significantly narrower than ULS conditions, the behaviour of the TMD outside its operating conditions is unpredictable.

Another solution known in the prior art is the use of hysteretic dampers such as low-yield steel restraining braces, which can be used to give added damping and stiffness to the structural steel of a building. While they may be relatively inexpensive to fit, the damping function is only achieved when such braces actually yield, and they are not effective for small earthquakes or modest wind gusts. Because they are integral to the structure of a building, such braces are difficult and expensive to maintain and repair.

Base isolation dampers can be used to absorb vibrations at the base of a building. Such dampers have been available for many years, and their use is well established. In effect, a structure is mounted on its base on a number of damping elements which isolate movements of the building structure against movement in the ground. Base isolation dampers are an effective solution to earthquake movement, but they are costly to install, and are only suitable for relatively low buildings. Once installed, base isolation dampers are also extremely difficult and costly to replace. Base isolation dampers are not effective for wind-loading, because they are designed to be static (or with elastic deformation in the case of base isolators with springs) and do not provide any additional damping. For building vibration parallel to wind, building deformation is usually not in an oscillatory (+/-) mode. Furthermore, the use of base isolation dampers means that the building is mechanically isolated from its surroundings, so all cables, pipework and other services must have flexible connections to permit relative movement.

Viscous dampers, also known as hydraulic dampers, can be used for absorbing and dissipating oscillatory motion in a building. Hydraulic dampers have the advantage that they can absorb high loads during a large seismic event. However, they are expensive to install and expensive to maintain or replace, and replacement is particulary onerous if a unit fails. The movement of fluid between chambers inside a viscous damper is controlled by valves, and the aperture of these valves can be tuned to the required movement, either slow or fast. The viscous damper cannot, therefore, be tuned for both slow (low frequency such as wind) and fast (high frequency such as earthquake) movements.

A further disadvantage of hydraulic dampers is that they have no inbuilt redundancy - if a unit fails, then it ceases to function as a damper.

Visco-elastic dampers are used in bracing structures. They have the advantage that they are relatively low-cost, low-maintenance, and may be retro-fitted to existing buildings. Their visco-elastic behaviour also means that they can efficiently absorb oscillations at a broad range of frequencies, with the result that they do not require tuning to the extent required with other dampers.

For high buildings it is possible to dampen low-order oscillation modes of the structure by constructing the building with separate vertical members isolated from each other by dampers which absorb relative vertical movement between adjacent vertical members. Such an arrangement is disclosed, for example, in patent application W02007045900 (ARUP), which describes a building having a core structure and several horizontal outrigger members connected via vertical dampers to perimeter columns. The vertical dampers are used to damp relative vertical displacement between the core (via the outriggers) and perimeter columns. A similar idea was subsequently disclosed in the patent application US2008/0229684 (Daewoo). The peripheral columns are stiff structures which provide a strong vertical structure against which the vertical dampers can exert a reaction in the up or down directions when the core undergoes flexural deformation.

In the prior art arrangements disclosed in W02007045900 and US2008/0229684, the vertical dampers are mounted at points in approximately the top two-thirds of the height of the structure. The amount of relative vertical movement between the adjacent vertical elements is small in the lower part of the building, so the vertical dampers are mounted where the relative vertical movement is greater. However, the flexural deformation of a structure induced by, for example, earth tremors or wind gusts, is often a first, second or higher-order oscillation of the entire height of the building, so the vertical damping arrangement of the prior art only addresses a part of the flexing problem, and is only suitable for building above a certain height. Different types of damper would be required to damp lateral (horizontal) movements in the lower parts of the structure, or in less high buildings.

US patent application US2008/0307722 describes the use of bi-axial visco-elastic dampers to simultaneously damp axial (vertical) and lateral (horizontal) motion between two parallel structural elements. The dampers of US2008/0307722 are shown evenly distributed, with one large damper per vertical section of the structure.

The objective of the present invention is to overcome the above disadvantages with the prior art damping systems. In particular, it is the aim of the invention to provide efficient damping for a structure, of any height, in such a way as to achieve improved damping of the whole structure, with a broad harmonic response (both amplitudes and frequencies), and with reduced installation and maintenance costs.

### Summary of the invention

In order to achieve the above objectives, the invention proposes a building structure comprising a first structural element extending parallel to a vertical axis of the building structure, the first structural element being substantially self-supporting and susceptible of shear or flexural deformation, a component of the shear or flexural deformation being along a horizontal axis of the building structure,
a second structural element, adjacent to the first structural element and extending parallel to the vertical axis, the first and second structural elements being such that the said shear or flexural deformation causes relative axial movements between the first and second structural elements parallel to said first axis at a first predetermined location along said vertical axis, and
a plurality of vertically spaced damping stages, each damping stage comprising a rigid outrigger element extending outward from the first structural element towards the second structural element,
a plurality of biaxial dampers, each capable of damping along at least two different axes,
the building structure being characterized in that
the dampers being arranged pairwise, in vertically spaced pairs along the vertical axis of the building structure, between the first and second structural elements, each pair of dampers comprising a first damper and a second damper arranged, vertically spaced, in a common region of the building structure,
the first and second dampers being mounted between an outer part of each outrigger and the second structural element, so as to provide axial damping along the vertical axis and lateral damping along the horizontal axis, and such that, during said shear or flexural deformation of the first structural element in the common region of the building structure, the first damper is in one of tension or compression along one of its damping axes, while the second damper is in the other of tension or compression along one of its damping axes.

In one variant of the structure of the invention, the outrigger element is a wall of the building structure.

In another variant of the structure of the invention, at least one of the first and second dampers is a visco-elastic damping device.

In another variant of the structure of the invention, one of the first and second structural elements is a first core of the building structure and other of the first and second structural elements is either a perimeter column of the building structure or a second core of the building structure.

The invention also foresees a method of damping movements in a building structure comprising a first structural element extending parallel to a vertical axis of the building structure, the first structural element being substantially self-supporting and susceptible to shear or flexural deformation, a component of the shear or flexural deformation being along a horizontal axis of the building structure, the method comprising:
a first step of providing a second structural element adjacent to the first structural element, and extending parallel to the vertical axis, the first and second structural elements being such that the said shear or flexural deformation causes relative axial movements between the first and second structural elements parallel to said first axis at a first predetermined location along said vertical axis,
a second step of arranging a plurality of vertically spaced damping stages, each damping stage comprising a rigid outrigger element extending outward from the first structural element towards the second structural element,
the second step including arranging a plurality of biaxial or multiaxial dampers pairwise, in vertically spaced pairs along the vertical axis of the building structure, between the first and second structural elements,
each pair of dampers comprising a first damper and a second damper arranged, vertically spaced, in a common region of the building structure,
the first and second dampers being mounted between an outer edge of each outrigger and the second structural element, so as to provide axial damping along the vertical axis and lateral damping along the horizontal axis, and such that, during said shear or flexural deformation of the first structural element in the common region of the building structure, the first damper is in one of tension or compression along one of its damping axes, while the second damper is in the other of tension or compression along one of its damping axes.

The first and second structural elements may be, for example, a core of a building and a peripheral column. Such columns can be integral to a building, or they can be external to the building. Alternatively, the first and second elements may be two adjacent core structures of a single building, or even adjacent buildings.

The relative horizontal movements which are to be damped are advantageously movements of the first and second elements towards and away from each other. Note that in this description a Z axis is defined as being the vertical axis of a structure or building, parallel to the first and second elements, while the X and Y axes, substantially orthogonal to one another, lie in a substantially horizontal plane, orthogonal to the Z axis. In the case of a building of rectangular cross-section, the X and Y axes can be assumed to lie substantially parallel to the length and the width of the building's cross-section respectively. Thus, in this embodiment, the first damper is arranged to damp movements in the Z direction as well as in one direction in the horizontal plane, namely along a first horizontal axis, parallel to the X or Y axis, at the first predetermined location along the first axis. In this embodiment, this second axis is preferably the direction of motion of the first and second structural elements towards and away from each other, or at least the movement of the parts of the first and second structural elements at the first predetermined location.

The first and second structural elements are preferably substantially stiff structures, and the first and second damping means act as a pair, opposing any forces (such as shear or flexural forces) which would tend to move the first and second element out of their mutually parallel alignment. Both dampers also provide a damped reaction opposing relative axial forces or movements (along the vertical axis in the case of vertical structural elements).

The use of pairs of dampers, each damper providing independent damping along an axis parallel to the first horizontal axis, with the dampers being mounted vertically spaced at the end of outrigger elements, gives a greatly enhanced damping of the shear or flexural forces and movements in the vertical structure. The outrigger element also offers increased moment for vertical damping forces.

The damper or dampers are advantageously bi-axial or multi-axial visco-elastic dampers. Such dampers which may comprise one or more pairs of rigid (for example metal) plates, each pair of plates being separated by a sheet of visco-elastic material such as highly engineered rubber. Such dampers offer broad-response damping in all directions parallel to the plane of the plates and sheets. Particularly advantageous for the invention is the use of such plate/sheet dampers in which the visco-elastic material has a substantially rectangular or elliptical section, such that it has two principal damping axes. The two principal damping axes can then be arranged to coincide with the desired Z and X/Y axes of the building being damped.

Advantageously, the outrigger element may be of a strut and tie construction to reduce weight while retaining stiffness and strength in the structure. Alternatively, the outrigger element may be implemented as a wall of the building structure - an internal wall extending outward from a load-bearing core, for example.

The method of the invention may be applied to many kinds of structures. It is particularly advantageous when the structure is a building, with the first element being a core of the building and the second element being a perimeter column of the building. The method of the invention may also be advantageously used in buildings in which the first vertically extending structural element is a first core of the building and the second vertically extending structural element is a second core of the building.

Alternatively, the invention can be used to damp vertical movements, such as oscillations, in horizontal structural elements such as cantilever floors or beams.

According to the method and structure of the invention, therefore, the same type of damping elements can be used for damping the top, middle and bottom sections of the building, and the damping elements can be used for damping motion on all kinds of buildings. The use of bi-axial visco-elastic dampers, such as VSL's Gensui dampers, means reduced cost and improved ease of maintenance. Because of their compact size and easy mounting, such dampers can also readily be retro-fitted to existing structures.

Because of the versatility of the bi-directional visco-elastic damper, the method and structure of the invention are suitable not only for high-rise buildings, but for all kinds of structures including low-rise constructions, houses, bridges and many others.

Further advantages of the invention will become apparent from the following detailed description and figures.
Figures 1 a to 1 c shows a prior art arrangement of hydraulic dampers
Figure 2a to 2d illustrate the general principle of the invention.
Figures 3a and 3b illustrate how a visco-elastic damper may be arranged between two vertical structures to damp movement between them.
Figures 4a to 4c show a schematic view of a bi-axial visco-elastic damper.
Figures 5a to 5e show the application of the invention to a high-rise building.
Figures 6a to 6e show a space-saving variant of the invention
Figures 7a to 7c show various example configurations of the invention.

The figures are included for illustrative purposes only, and are intended to aid understanding of the invention without implying any limitation of the scope of the accompanying claims.

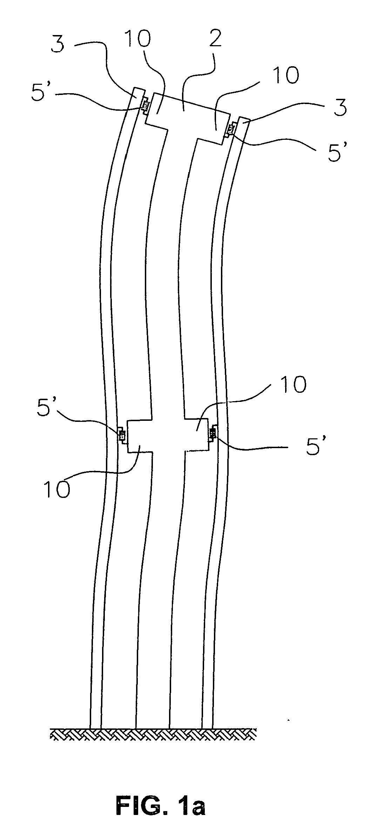

The general principle of damping flexural deformation motion by damping the vertical movement between adjacent vertical structures can be understood with reference to Figure 1a, which represents in greatly exaggerated, schematic form an elevation view of a building undergoing oscillatory deformation. The building in the illustrated example comprises a central core structure 2, which might for example be the main static load-bearing structure, and two external columns 3. As with the prior art systems mentioned earlier in this application, damping of the oscillatory motion can be achieved by means of vertical dampers 5' mounted between the core 2 and the columns 3 at various points along the height of the structure, so as to damp relative vertical movement between the core 2 and the columns 3. Outriggers 10 may be used as cantilevers to give extra moment to the damping forces. The columns 3 are capable of withstanding the vertical dynamic tension and compression reactions transferred to them by the vertical dampers from the core 2 when it flexes. In this way, a significant proportion of the kinetic energy in the flexural and oscillatory motion of the core 2 can be dissipated in the vertical dampers 5'.

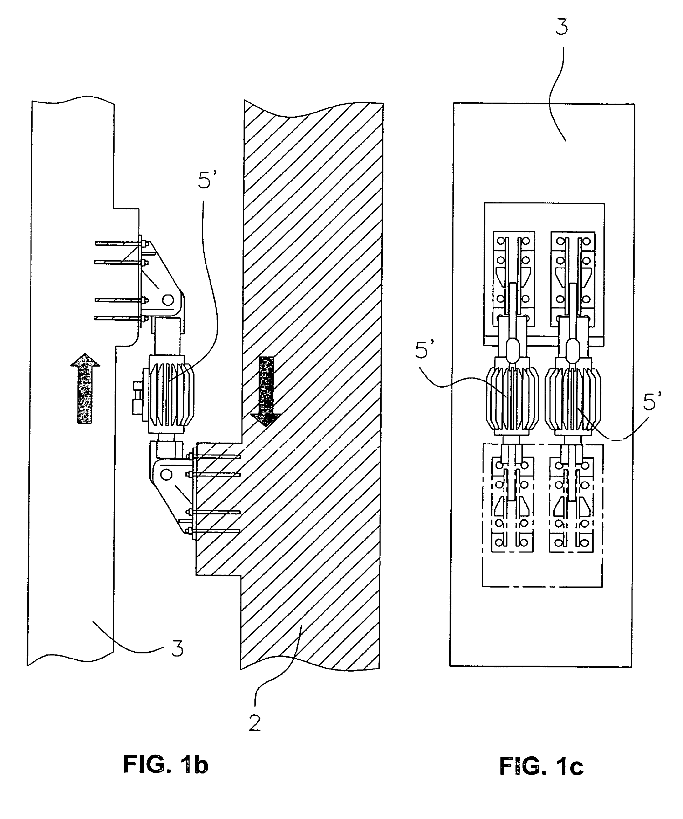

Figures 1b and 1c show, in side and front elevations, more detail of a typical vertical damping arrangement of the prior art. Uni-axial dampers 5', which may be hydraulic dampers, although other kinds of dampers may also be used, are mounted between the perimeter column 3 and the core 2, so as to damp movements parallel to the core and column, as indicated by the arrows shown in Figure 1 b.

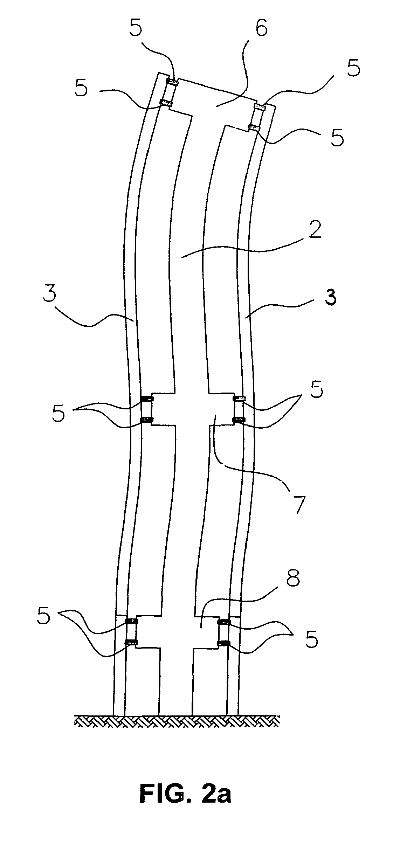

By contrast, the dampers 5 used in the method and structure of the invention are bi-axial dampers capable of damping along at least two different axes, as shown in Figures 2a to 2d. The structure 1 illustrated in Figure 2a is shown with three successive damping stages at different heights on the structure. Of course, such a structure could be equipped with as many damping stages as necessary. The top-most damping stage comprises an outrigger 6 for providing rigid mechanical extension of the core 2 outwards towards the peripheral columns 3. In a high-rise building, such an outrigger may extend vertically the height of one storey or more, for example.

The embodiment of the invention illustrated in Figures 2a to 2d has vertically spaced pairs of biaxial dampers 5, 5a, 5b mounted at each end of an outrigger 6, 7, 8 between the outrigger 6, 7, 8 and the column 3. Each pair of dampers 5a, 5b provides damping not only in a vertical direction (along a vertical axis parallel to the core 2 and to the column 3), but also along mutually parallel horizontal axes, the horizontal axes being substantially parallel to the outrigger 6, 7, 8 and orthogonal to the vertical axis.

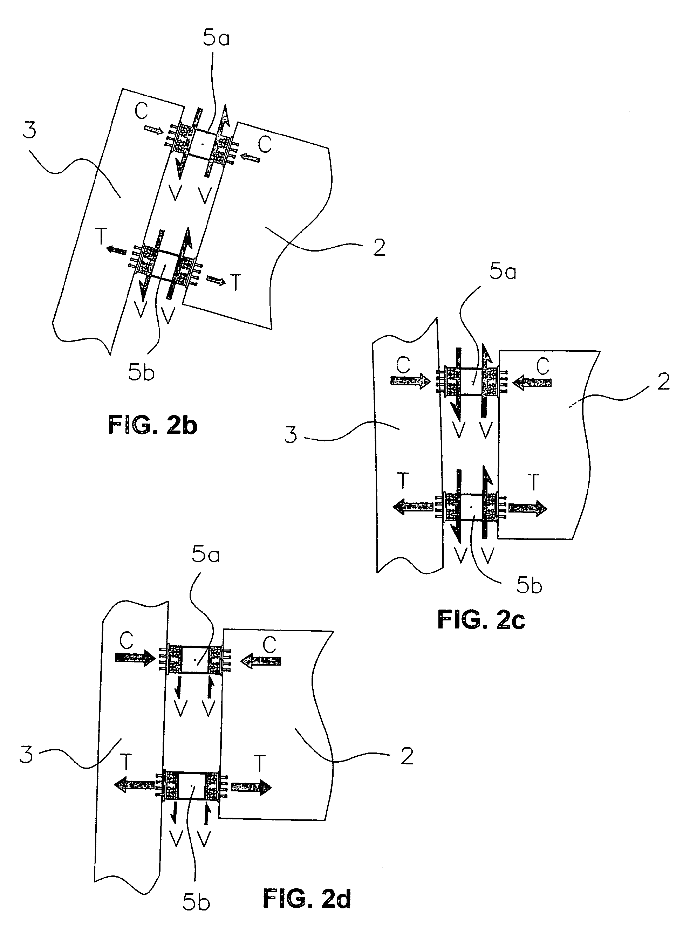

The pairwise, vertically-spaced arrangement of the dampers 5a, 5b, together with the stiffness of the columns 3, introduces a secondary damping effect in addition to the vertical and horizontal damping provided by each damper 5 individually. This effect can be seen in Figure 2c, for example: in addition to the vertical displacement, which is damped by the shear deformation of dampers 5a and 5b, a lateral displacement of the outrigger 7 relative to the column 3 will give rise to an imbalance in horizontal forces on the dampers 5a and 5b. If, for example, the outrigger 7 moves to the right (as viewed in Figure 2c) while remaining horizontal, the column, by virtue of its innate stiffness, resists being deformed, with the result that the upper damper 5a of the pair is subject to compressive forces C, while the lower damper 5b is subject to horizontal tension forces T. Thus, the stiffness of the column, together with the visco-elastic behaviour of the dampers 5a and 5b, provides an extra, secondary, damping effect on the horizontal motion of the outrigger 7 relative to the column 3. The columns 3 are constructed to be stiff enough to provide the required resistance to shear deformation via the pairs of dampers 5a, 5b, and the vertical spacing of the dampers 5a and 5b is chosen to provide optimum damping for the anticipated movements. Note also that a similar damping effect occurs if the outrigger 7 undergoes a tilting or rotational movement relative to the column 3.

The characteristics of the dynamic forces and deformations are normally different at different heights on the building 1, and three different instances of the pairwise damping are shown in Figures 2b, 2c and 2d. The relative sizes and directions of the arrows in Figures 2b to 2d represent the size and orientation of the forces and/or displacements concerned, and are therefore indicative of the amount of damping which is expected during flexing or shear deformation of the structure 1.

Figure 2b shows damping at or near the top of the building 1 where the flexural deformation of the core 2 and the columns 3 usually gives rise to the greatest relative vertical displacement between the core 2, via the outrigger 6 and each column 3. This large relative vertical displacement causes a large vertical shear deformation V in both of the dampers 5a and 5b, illustrated in Figure 2b. By comparison, the relative horizontal or torsional shear deformation of the core 2 relative to the column 3 is relatively modest, with the result that the compression C and tension T in dampers 5a and 5b would be smaller than the vertical shear forces occasioned by the flexural deformations of the structure 1.

Figure 2c shows damping at a mid-point on the height of the structure 1, at which point the shear forces on the dampers 5a and 5b due to relative vertical displacement of the column 3 and the outrigger 7 may be comparable to the opposed horizontal compression C and tension T forces in the dampers 5a and 5b, respectively.

Figure 2d shows damping at a point lower down the building 1, where the vertical movement between core 2 and column 3, via outrigger 8, is less pronounced. A shear deformation of the structure 1 at this height engenders horizontal forces of compression C and tension T in the dampers 5a and 5b which may be significantly greater in magnitude than the shear forces V due to vertical movement.

By using bidirectional, super-high damping visco-elastic dampers such as the Gensui dampers from VSL, it is possible to damp the vertical and the horizontal components of the deformations at the same time, using the same damper. These dampers exhibit bi-linear hysteresis and high damping and stiffness properties in at least two directions. They offer vibration control within a wide frequency range. They are effective for all zones and types of buildings. They are maintenance-free, highly durable, and their damping characteristics are largely independent of strain ratio, temperature and vibration frequency. Multi-unit devices also offer significant redundancy; in the event that a device did start to fail, it would fail gradually, suffering increasingly degraded performance, in contrast to the sudden complete failure seen, for example, in hydraulic dampers.

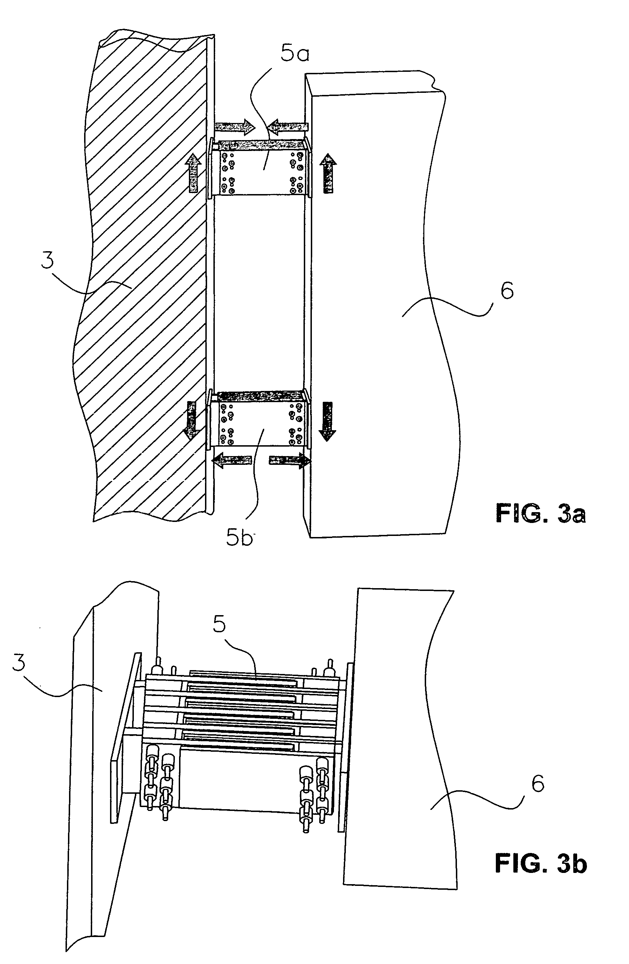

The application of such dampers is illustrated in Figures 3a and 3b. Figure 3b shows in close-up a multi-layered Gensui damper mounted between the column 3 and and outrigger 6. The damper 5, as will be discussed shortly, comprises multiple layers of a visco-elastic rubber-like substance, each layer being sandwiched between steel plates. Figure 3a shows two such dampers 5a and 5b mounted at the end of an outrigger 6, as shown in Figures 2a to 2d. Arrows indicate the dynamic loading to which the dampers are subjected.

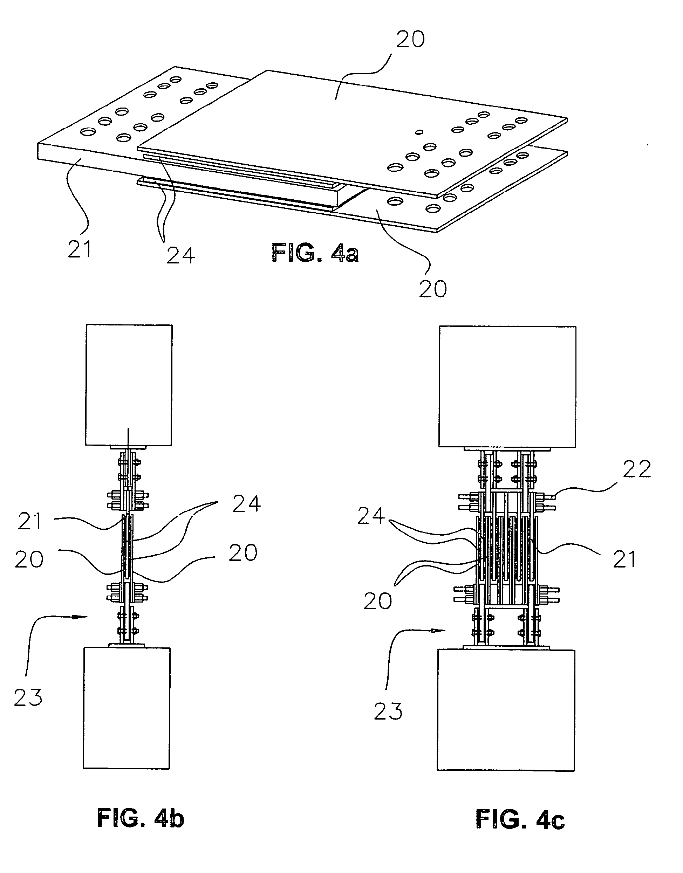

Figures 4a to 4c show in more detail how a visco-elastic damper, such as the Gensui dampers from VSL, may be constructed. Figure 4a illustrates the basic concept of such a damper: steel plates 20, and 21 (which could alternatively be fabricated in other rigid materials) enclose two layers 24 of visco-elastic material such as rubber. Plates 20 are bolted to a first structure, plate 21 to a second, with the result that any relative movement of the two structures in the plane of the damper can be damped by the damper - any combination of shear, rotation or translation in the plane. Note that spacers are usually provided between the plates 20 so that the mounting bolts 22 can be tightened without crushing or otherwise distorting the visco-elastic material 24 between the plates. Brackets 23 are used to mount the damper units to the construction being damped. Figures 4a and 4b show a single unit damper in perspective and elevation views, respectively. Figure 4c shows in elevation view a multi-unit damper. The visco-elastic material used in such dampers is usually a highly engineered type of natural or synthetic rubber or rubber composite, although a variety of materials can be used.

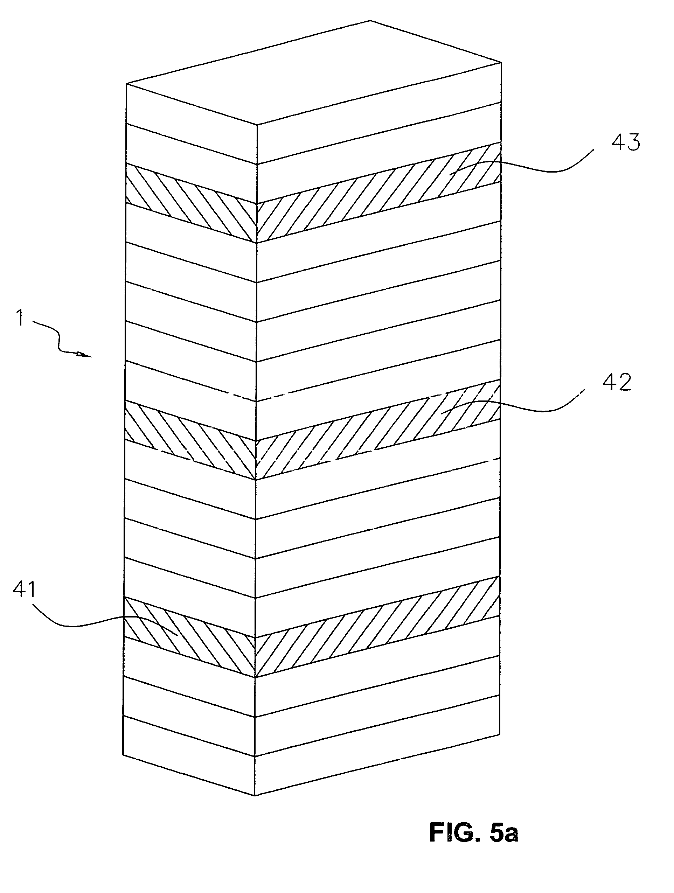

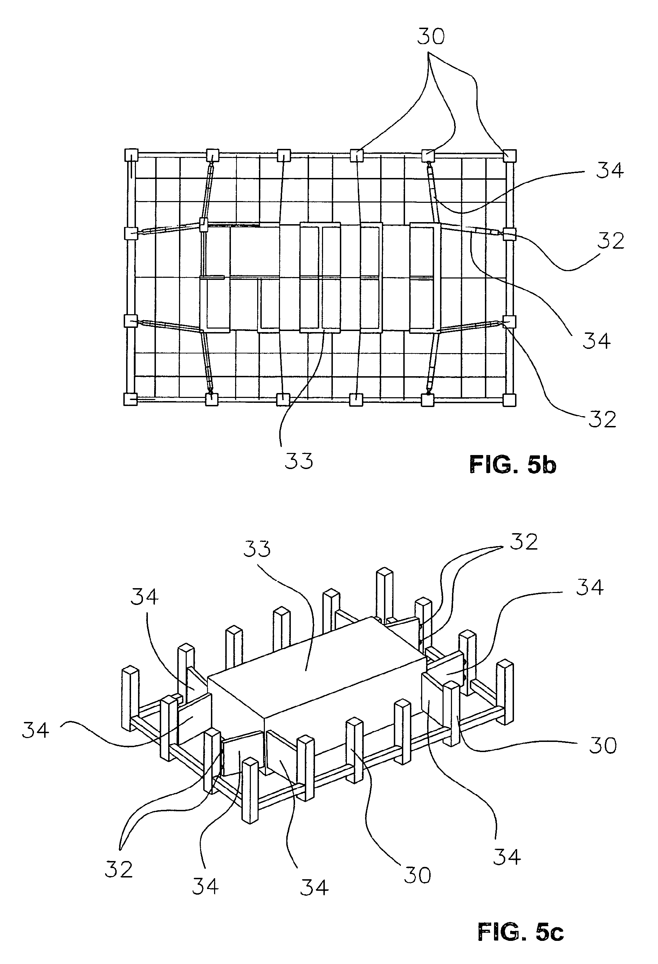

Figures 5a to 5c show an example of how the damping method of the invention can be applied to a high-rise building. In the example shown, damping is provided at three floors of the building, labeled 41, 42 and 43 in Figure 5a. The choice of number of floors is dependent on the structure to be damped - for some structures, more floors may require damping, for others just one or two. Figures 5b and 5c show in plan and perspective view the outrigger walls 34 between the core structure 33 and the columns 30. The dampers 32 are positioned in pairs near the top and bottom of the outside edge of each wing-wall outrigger 34. One advantage of providing the dampers 32 at the top and at the bottom of the outrigger 34 is that the adjacent floor slab (above or below, respectively) gives the outrigger 34 additional strength, and also helps to prevent the wing wall from buckling due to compression.

When retrofitting outriggers and dampers to existing structures, the outrigger wing wall or truss can be realized by locally thickening, or otherwise strengthening, an existing wall or truss of the structure.

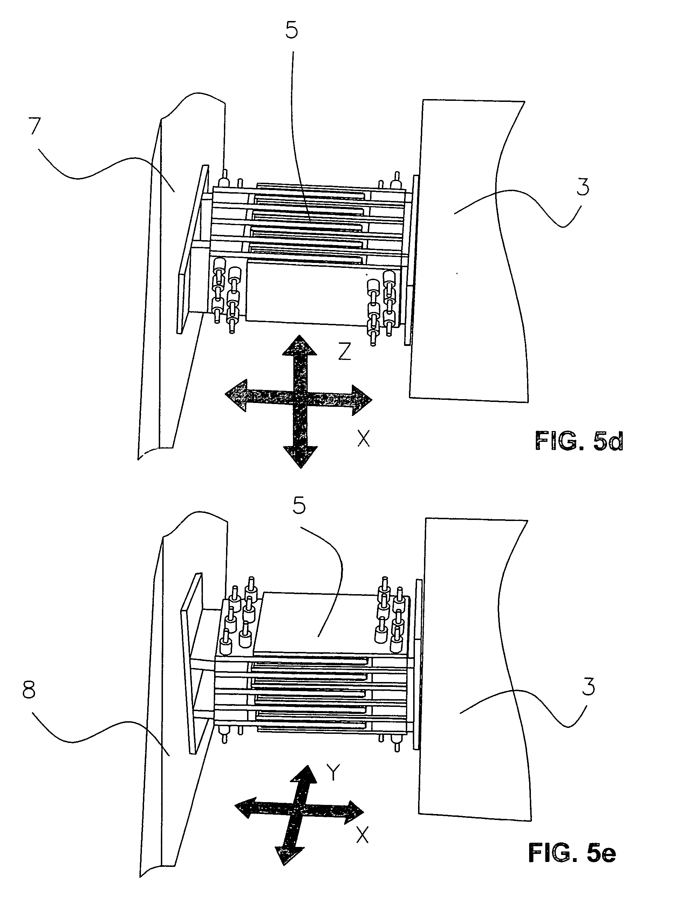

In the example shown in Figures 5a to 5c, the dampers 32 are arranged, as described in Figure 5d, to damp movements in the Z and X directions or the Z and Y directions, depending on which side of the building they are (i.e. along the vertical axis and along a horizontal axis running through the column and the core). This can be the case on all the floors which are damped. Alternatively, for damping in the lower part of the building, where the vertical component of the deformations is much smaller, the bidirectional dampers 5 can be mounted such that they damp in the X and Y directions, as indicated in Figure 5e. In this manner, the extra damping of shear and flexural deformation of the structure is maintained, thanks to the pairwise mounting of the vertically separated dampers, but there is also a greatly improved damping of oscillatory or other movements in both the X and the Y axes in the horizontal plane.

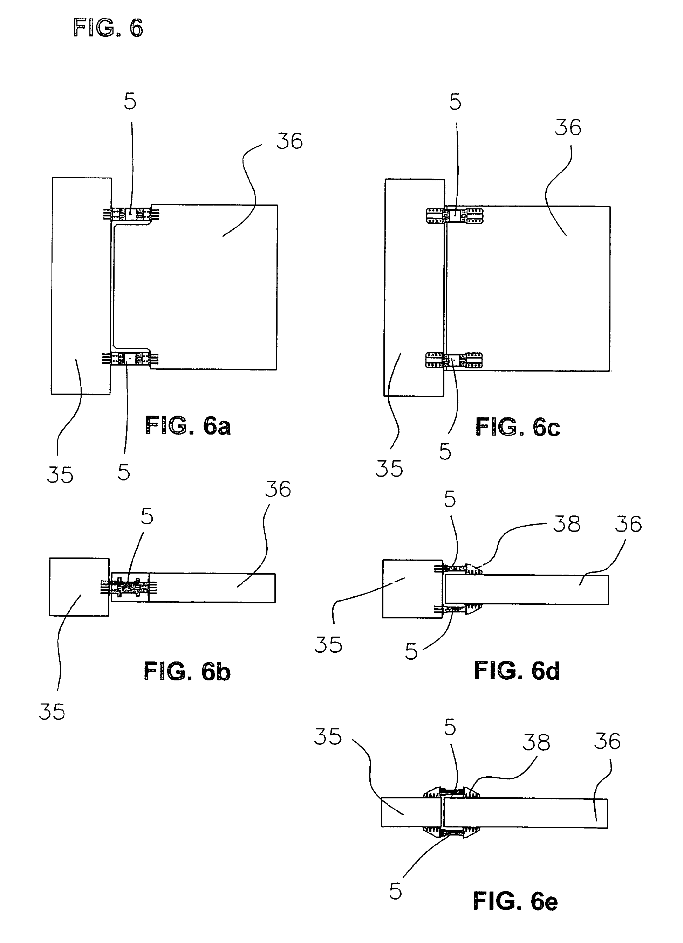

Figures 6a to 6e show, in schematic form, plan and elevation views of two ways in which an outrigger can be designed to use the damping arrangement of the invention, while optimizing the amount of space required for the dampers themselves. Figures 6a and 6b show, in side elevation and plan view respectively, how the bidirectional dampers 5 can be recessed neatly into the outrigger 36, which may be a wall of the building being damped. Only a small gap is therefore necessary between the outrigger 36 and the perimeter column 35, leaving almost the entire space between outriggers, and between the core and the perimeter columns, available for use by the occupants of the building. Figures 6c to 6e show an alternative space-optimising arrangement in which, instead of being recessed into the outrigger wall 36, the dampers 5 are fixed to the sides of the outriggers 36 using brackets 38. Depending on the geometry of the perimeter column, the dampers 5 may be bolted to the inner face of the column, as in Figure 6d, or by using brackets 38 similar to those used to fix the dampers to the outrigger wall.

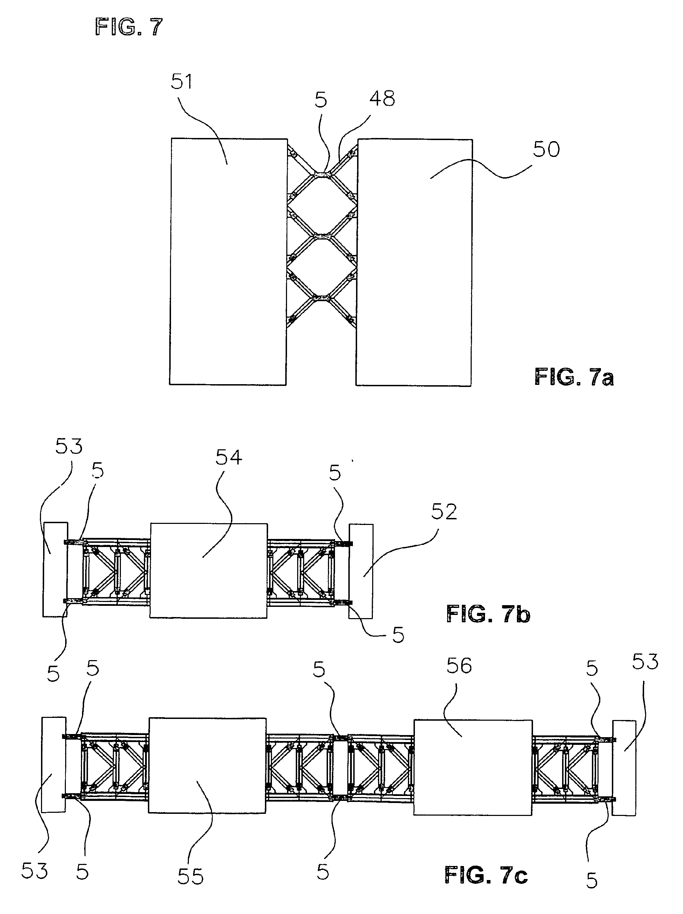

Figures 7a to 7c show in plan view, various examples of construction configurations using the present invention. In Figure 7a, two vertical core structures 50 and 51 are inter-damped using bidirectional dampers, with the damping being carried out between two bracing structures 48, which function as outriggers to enhance the damping moment and, because the dampers 5 are fitted in vertical pairs according to the invention, to provide the stiffness required for the secondary damping of horizontal shear forces mentioned earlier in this description.

Figure 7b shows a core 54 and two adjacent columns 52 and 53, with a strut-and-tie type outrigger constructed of braced strutwork, the damping units 5 being mounted between the strutwork and the columns 52, 53. Figure 7c illustrates how the configuration of Figure 7b can be altered or extended to a structure having two or more cores: bidirectional dampers 5 can be fitted between the cores 55, 56, or between one of the cores and a perimeter column, or both.

## Claims

1. A building structure (1) comprising:
a first structural element (2) extending parallel to a vertical axis of the building structure (1), the first structural element (2) being substantially self-supporting and susceptible of shear or flexural deformation, a component of the shear or flexural deformation being along a horizontal axis of the building structure,
a second structural element (3), adjacent to the first structural element (2) and extending parallel to the vertical axis, the first (2) and second (3) structural elements being such that the said shear or flexural deformation causes relative axial movements between the first (2) and second (3) structural elements parallel to said first axis at a first predetermined location along said vertical axis, and
a plurality of vertically spaced damping stages, each damping stage comprising a rigid outrigger element (6, 7, 8, 10) extending outward from the first structural element (2) towards the second structural element (3),
a plurality of biaxial dampers (5a, 5b), each capable of damping along at least two different axes,
the building structure (1) being **characterized in that**
the dampers being arranged pairwise, in vertically spaced pairs (5) along the vertical axis of the building structure (1), between the first (2) and second (3) structural elements,
each pair (5) of dampers (5a, 5b) comprising a first damper (5a) and a second damper (5b) arranged, vertically spaced, in a common region of the building structure (1),
the first (5a) and second (5b) dampers being mounted between an outer part of each outrigger and the second structural element (3), so as to provide axial damping along the vertical axis and lateral damping along the horizontal axis, and such that, during said shear or flexural deformation of the first structural element (2) in the common region of the building structure (1), the first damper (5a) is in one of tension (T) or compression (C) along one of its damping axes, while the second damper (5b) is in the other of tension (T) or compression (C) along one of its damping axes.

2. The building structure (1) of claim 1, in which the outrigger element (6, 7, 8) is a wall of the building structure (1).

3. The building structure (1) of one of the preceding claims, in which at least one of the first and second dampers (5, 5a, 5b, 32) is a visco-elastic damping device.

4. The building structure (1) of one of the preceding claims, in which one of the first (2) and second (3) structural elements is a first core of the building structure (1) and other of the first (2) and second (3) structural elements is either a perimeter column of the building structure (1) or a second core of the building structure (1).

5. Method of damping movements in a building structure (1) comprising a first structural element (2) extending parallel to a vertical axis of the building structure (1), the first structural element (2) being substantially self-supporting and susceptible to shear or flexural deformation, a component of the shear or flexural deformation being along a horizontal axis of the building structure (1), the method comprising:
a first step of providing a second structural element (3) adjacent to the first structural element (2), and extending parallel to the vertical axis, the first (2) and second (3) structural elements being such that the said shear or flexural deformation causes relative axial movements between the first (2) and second (3) structural elements parallel to said first axis at a first predetermined location along said vertical axis,
a second step of arranging a plurality of vertically spaced damping stages, each damping stage comprising a rigid outrigger element (6, 7, 8, 10) extending outward from the first structural element (2) towards the second structural element (3),
the method being **characterized in that**:
the second step includes arranging a plurality of biaxial or multiaxial dampers pairwise, in vertically spaced pairs along the vertical axis of the building structure, between the first and second structural elements,
each pair of dampers comprising a first damper and a second damper arranged, vertically spaced, in a common region of the building structure,
the first and second dampers (5a, 5b) being mounted between an outer edge of each outrigger and the second structural element (3), so as to provide axial damping along the vertical axis and lateral damping along the horizontal axis, and such that, during said shear or flexural deformation of the first structural element (2) in the common region of the building structure (1), the first damper (5a) is in one of tension (T) or compression (C) along one of its damping axes, while the second damper (5b) is in the other of tension (T) or compression (C) along one of its damping axes.

6. The method of claim 5, in which the first and/or second damping means (5, 5a, 5b, 32) are visco-elastic damping devices.

7. The method of one of claims 5 or 6, in which one of the first and second structural elements (2) is a first core of the building structure and other of the first and second structural elements (3) is either a perimeter column of the building structure (1) or a second core of the building structure (1).

## Patentansprüche

1. Eine Gebäudestruktur (1), umfassend:
ein erstes strukturelles Element (2), welches sich parallel zu einer vertikalen Achse der Gebäudestruktur (1) erstreckt, wobei das erste strukturelle Element (2) im Wesentlichen selbsttragend und durch Schub- oder Biegeverformung verformbar ist, wobei eine Komponente der Schub- oder Biegeverformung entlang einer horizontalen Achse der Gebäudestruktur liegt,
ein zweites strukturelles Element (3), welches benachbart zum ersten strukturellen Element (2) ist, und welches sich parallel zur vertikalen Achse erstreckt, wobei das erste (2) und das zweite (3) strukturelle Element derart sind, dass die Schub- oder Biegeverformung relative axiale Bewegungen zwischen dem ersten (2) und zweiten (3) strukturellen Element parallel zur genannten ersten Achse an einem ersten vorbestimmten Ort entlang der vertikalen Achse bewirkt, und
eine Vielzahl von vertikal beabstandeten Dämpfungsgerüsten, wobei jedes Dämpfungsgerüst ein starres Auslegerelement (6, 7, 8, 10) umfasst, welches sich vom ersten strukturellen Element (2) in Richtung des zweiten strukturellen Elements (3) nach aussen erstreckt,
eine Vielzahl von biaxialen Dämpfern (5a, 5b), welche jeweils in der Lage sind, entlang mindestens zweier unterschiedlicher Achsen zu dämpfen,
die Gebäudestruktur (1) **dadurch gekennzeichnet, dass**
die Dämpfer paarweise, in vertikal beabstandeten Paaren (5), entlang der vertikalen Achse der Gebäudestruktur (1), zwischen dem ersten (2) und dem zweiten (3) strukturellen Element angeordnet sind,
wobei jedes Paar (5) der Dämpfer (5a, 5b) einen ersten Dämpfer (5a) und einen zweiten Dämpfer (5b) umfasst, welche, vertikal voneinander beabstandet, in einem gemeinsamen Bereich der Gebäudestruktur (1) angeordnet sind,
wobei die ersten (5a) und die zweiten (5b) Dämpfer zwischen einem äusseren Teil jedes Auslegers und dem zweiten strukturellen Element (3) derart angebracht sind, sodass sie axiale Dämpfung entlang der vertikalen Achse und seitliche Dämpfung entlang der horizontalen Achse bereitstellen, und derart, dass sich, während der Schub- oder Biegeverformung des ersten strukturellen Elements (2) im gemeinsamen Bereich der Gebäudestruktur (1), der erste Dämpfer (5a) entweder in der Spannung (T) oder Kompression (C) entlang einer seiner Dämpfungsachsen befindet, während der zweite Dämpfer (5b) im anderen der Spannung (T) oder Kompression (C) entlang einer seiner Dämpfungsachsen befindet.

2. Die Gebäudestruktur (1) gemäss Anspruch 1, in welcher das Auslegerelement (6, 7, 8) eine Wand der Gebäudestruktur (1) ist.

3. Die Gebäudestruktur (1) gemäss einem der vorangehenden Ansprüche, in welcher mindestens einer der ersten oder zweiten Dämpfer (5, 5a, 5b, 32) eine viskoelastische Dämpfungsvorrichtung ist.

4. Die Gebäudestruktur (1) gemäss einem der vorangehenden Ansprüche, in welcher entweder das erste (2) oder das zweite (3) strukturelle Element ein erster Kern der Gebäudestruktur (1) ist, und in welcher der andere zwischen dem ersten (2) und dem zweiten (3) strukturellen Element entweder eine Umfangssäule der Gebäudestruktur (1) oder ein zweiter Kern der Gebäudestruktur (1) ist.

5. Verfahren zur Dämpfung von Bewegungen in einer Gebäudestruktur (1), umfassend ein erstes strukturelles Element (2), welches sich parallel zu einer vertikalen Achse der Gebäudestruktur (1) erstreckt, wobei das erste strukturelle Element (2) im Wesentlichen selbsttragend, und durch Schub- oder Biegeverformung verformbar ist, wobei eine Komponente der Schub- oder Biegeverformung entlang einer horizontalen Achse der Gebäudestruktur (1) liegt, wobei das Verfahren umfasst:
einen ersten Schritt zum Zurvefügungstellen eines zweiten strukturellen Elements (3), welches benachbart zum ersten strukturellen Element (2) ist, und welches sich parallel zur vertikalen Achse erstreckt, wobei das erste (2) und das zweite (3) strukturelle Element derart sind, dass die genannte Schub- oder Biegeverformung relative axiale Bewegungen zwischen dem ersten (2) und zweiten (3) strukturellen Element parallel zur genannten ersten Achse an einem ersten vorbestimmten Ort entlang der vertikalen Achse bewirkt, und
einen zweiten Schritt zum Anordnen einer Vielzahl von vertikal beabstandeten Dämpfungsgerüsten, wobei jedes Dämpfungsgerüst ein starres Auslegerelement (6, 7, 8, 10) umfasst, welches sich vom ersten strukturellen Element (2) in Richtung des zweiten strukturellen Elements (3) nach aussen erstreckt,
wobei das Verfahren **dadurch gekennzeichnet ist, dass**:
der zweite Schritt die Anordnung von einer Vielzahl biaxialier oder multiaxialer Dämpfer paarweise, in vertikal beabstandeten Paaren, entlang der vertikalen Achse der Gebäudestruktur, zwischen dem ersten und dem zweiten strukturellen Element einschliesst,
wobei jedes Paar der Dämpfer einen ersten Dämpfer und einen zweiten Dämpfer umfasst, welche, vertikal voneinander beabstandet, in einem gemeinsamen Bereich der Gebäudestruktur angeordnet sind,
wobei die ersten (5a) und die zweiten (5b) Dämpfer zwischen einem äusseren Rand jedes Auslegers und dem zweiten strukturellen Element (3) derart angebracht sind, dass sie axiale Dämpfung entlang der vertikalen Achse und seitliche Dämpfung entlang der horizontalen Achse bereitstellen, und derart, dass sich, während der Schub- oder Biegeverformung des ersten strukturellen Elements (2) im gemeinsamen Bereich der Gebäudestruktur (1), der erste Dämpfer (5a) entweder in der Spannung (T) oder Kompression (C) entlang einer seiner Dämpfungsachsen befindet, während sich der zweite Dämpfer (5b) im anderen der Spannung (T) oder Kompression (C) entlang einer seiner Dämpfungsachsen befindet.

6. Das Verfahren gemäss Anspruch 5, in welchem die ersten und/oder die zweiten Dämpfungsmittel (5, 5a, 5b, 32) viskoelastische Dämpfungsvorrichtungen sind.

7. Das Verfahren gemäss einem der Ansprüche 5 oder 6, in welchem entweder das erste (2) oder das zweite (3) strukturelle Element ein erster Kern der Gebäudestruktur (1) ist, und in welchem der andere zwischen dem ersten (2) und dem zweiten (3) strukturellen Element entweder eine Umfangssäule der Gebäudestruktur (1) oder ein zweiter Kern der Gebäudestruktur (1) ist.

## Revendications

1. Une structure de bâtiment (1) comprenant:
un premier élément structurel (2) s'étendant parallèlement à un axe vertical de la structure de bâtiment (1), le premier élément structurel (2) étant supporté substantiellement par lui-même et susceptible de déformation par cisaillement ou par flexion, un composant de la déformation par cisaillement ou par flexion étant le long d'un axe horizontal de la structure de bâtiment,
un second élément structurel (3), adjacent au premier élément structurel (2) et s'étendant parallèlement à l'axe vertical, les premier (2) et second (3) éléments structurels étant tels que ladite déformation par cisaillement ou par flexion provoque des mouvements relatifs axiaux entre les premier (2) et second (3) éléments structurels parallèlement audit premier axe à un premier emplacement prédéterminé le long dudit axe vertical, et
une pluralité de paliers d'amortissement espacées verticalement, chaque palier d'amortissement comprenant un élément stabilisateur rigide (6, 7, 8, 10) s'étendant vers l'extérieur du premier élément structurel (2) en direction du second élément structurel (3),
une pluralité d'amortisseurs bi-axiaux (5a, 5b), chacun capable d'amortir le long d'au moins deux axes différents,
la structure de bâtiment (1) étant **caractérisée en ce que**
les amortisseurs sont agencés par paire, dans des paires espacées verticalement (5) le long de l'axe vertical de la structure de bâtiment (1), entre les premier (2) et second (3) éléments structurels,
chaque paire (5) d'amortisseurs (5a, 5b) comprenant un premier amortisseur (5a) et un second amortisseur (5b) agencés, en étant espacés verticalement, dans une zone commune de la structure de bâtiment (1),
les premier (5a) et second (5b) amortisseurs étant montés entre une partie externe de chaque stabilisateur et le second élément structurel (3), pour fournir un amortissement axial le long de l'axe vertical et un amortissement latéral le long de l'axe horizontal, et tels que, pendant ladite déformation par cisaillement ou par flexion du premier élément structurel (2) dans la zone commune de la structure de bâtiment (1), le premier amortisseur (5a) est dans la tension (T) ou la compression (C) le long de l'un de ses axes d'amortissement, alors que le second amortisseur (5b) est dans l'autre parmi la tension (T) ou la compression (C) le long de l'un de ses axes d'amortissement.

2. La structure de bâtiment (1) selon la revendication 1, dans laquelle l'élément stabilisateur (6, 7, 8) est une paroi de la structure de bâtiment (1).

3. La structure de bâtiment (1) selon l'une quelconque des revendications précédentes, dans laquelle au moins un des premier et second amortisseurs (5, 5a, 5b, 32) est un appareil d'amortissement viscoélastique.

4. La structure de bâtiment (1) selon l'une quelconque des revendications précédentes, dans laquelle un des premier (2) et second (3) éléments structurels est un premier noyau de la structure de bâtiment (1) et l'autre des premier (2) et second (3) éléments structurels est soit une colonne de périmètre de la structure de bâtiment (1) soit un second noyau de la structure de bâtiment (1).

5. Procédé de mouvements d'amortissement dans une structure de bâtiment (1) comprenant un premier élément structurel (2) s'étendant parallèlement à un axe vertical de la structure de bâtiment (1), le premier élément structurel (2) étant supporté substantiellement par lui-même et susceptible de déformation par cisaillement ou par flexion, un composant de la déformation par cisaillement ou par flexion étant le long d'un axe horizontal de la structure de bâtiment (1), le procédé comprenant :
une première étape de création d'un second élément structurel (3) adjacent au premier élément structurel (2), et s'étendant parallèlement à l'axe vertical, les premier (2) et second (3) éléments structurels étant tels que ladite déformation par cisaillement ou par flexion provoque des mouvements relatifs axiaux entre les premier (2) et second (3) éléments structurels parallèlement audit premier axe à un premier emplacement prédéterminé le long dudit axe vertical,
une second étape d'arrangement d'une pluralité de paliers d'amortissement espacées verticalement, chaque palier d'amortissement comprenant un élément stabilisateur rigide (6, 7, 8, 10) s'étendant vers l'extérieur du premier élément structurel (2) dans la direction du second élément structurel (3),
le procédé étant **caractérisé en ce que** :
la seconde étape inclut l'arrangement d'une pluralité d'amortisseurs bi-axiaux ou multiaxiaux par paire, dans des paires espacées verticalement le long de l'axe vertical de la structure de bâtiment, entre les premier et second éléments structurels,
chaque paire d'amortisseurs comprenant un premier amortisseur et un second amortisseur arrangés, en étant espacés verticalement, dans une zone commune de la structure de bâtiment,
les premier et second amortisseurs (5a, 5b) étant montés entre un bord externe de chaque stabilisateur et le second élément structurel (3), de manière à mettre en oeuvre un amortissement axial le long de l'axe vertical et l'amortissement latéral le long de l'axe horizontal, et tels que, pendant ladite déformation par cisaillement ou par flexion du premier élément structurel (2) dans une zone commune de la structure de bâtiment (1), le premier amortisseur (5a) est dans la tension (T) ou la compression (C) le long d'un de ses axes d'amortissement, alors que le second amortisseur (5b) est dans l'autre parmi la tension (T) ou la compression (C) le long de l'un de ses axes d'amortissement.

6. Le procédé selon la revendication 5, dans lequel les premier et/ou les second moyens d'amortissement (5, 5a, 5b, 32) sont des appareils d'amortissement viscoélastiques.

7. Le procédé selon l'une quelconque des revendications 5 ou 6, dans lequel un des premier et second éléments structurels (2) est un premier noyau de la structure de bâtiment et un autre des premier et second éléments structurels (3) est soit une colonne de périmètre de la structure de bâtiment (1) soit un second noyau de la structure de bâtiment (1).
